# EUROPEAN PATENT APPLICATION

(11) **EP 0 635 547 A2**
(43) Date of publication of application: **25.01.1995**
(21) Application number: 94305143.3
(22) Date of filing: 13.07.1994
(51) Int. Cl.: C08L 69/00

(54) **Reduced gloss, flame retarded, high impact thermoplastic composition**

(30) Priority: 23.07.1993 US 97341
(71) Applicant: GENERAL ELECTRIC COMPANY, Schenectady, NY 12345 (US)
(72) Inventor: Bhatia, Qamar Singh, Albany, New York 12203 (US); Howe, Robert L., Greenville, New York 12082 (US)
(74) Representative: Pratt, Richard Wilson

(57) **Abstract**

Disclosed is are compositions having the characteristics of reduced gloss or low gloss, flame retardance and high impact. Such compositions comprise polycarbonate; a copolymer gel, such as styrene-acrylonitrile gel (SAN GEL); an impact modifier, such as an acrylate; a flame retardant; an anti-drip agent; optionally, a graft copolymer, such as acrylonitrile-butadiene-styrene (ABS); and, optionally, a copolymer, such as styrene-acrylonitrile (SAN).

## Description

### BACKGROUND OF THE INVENTION

### Field of the Invention

The invention relates to thermoplastic compositions having the characteristics of reduced gloss or low gloss, flame retardance and high impact. Particularly, the invention comprises a thermoplastic composition of polycarbonate; a copolymer gel, such as styrene-acrylonitrile gel (SAN GEL); an impact modifier, such as an acrylate; a flame retardant; an anti-drip agent; optionally, a graft copolymer, such as acrylonitrile-butadiene-styrene (ABS); and, optionally, a copolymer, such as styrene-acrylonitrile (SAN).

### Description of Related Art.

Approaches to obtaining low gloss for materials which naturally exhibit high gloss include functionalizing the butadiene or butadiene/styrene backbone or substrate onto which the other monomers are grafted. U.S. Pat. No. 4,612,347, for example, describes an acid functionalized graft copolymer. Other methods copolymerize a glycidyl ester with acrylonitrile, a vinyl and a rubbery copolymer as described in Japanese Kolai No. 65-156847. U.S. Pat. No. 4,710,534 suggests the use of an olefin rubber in combination with ABS in a polycarbonate or polycarbonate/polybutylene terephalate blend. U.S. Pat. Nos 4,677,162,. 4,624,986 and 4,526,926 all achieve low gloss by using mass or bulk polymerized ABS. U.S. Pat. No. 4,761,463 describes the use of vinyl compounds containing glycidyl esters of unsaturated acids for low gloss surfaces and U.S. Pat. No. 4,554,316 uses epoxy and acid (anhydride) functional olefins for the same purpose. U.S. Pat. No. 5,026,777 describes a thermoplastic molding composition having an inherent matter on how gloss surface finish obtained by blending a polycarbonate and an emulsion grafted ABS polymer, and a low gloss enhancing amount of a polylepoxide.

### SUMMARY OF THE INVENTION

The present invention relates to flame retarded, high impact thermoplastic compositions having a reduced gloss or low gloss surface finish. Thermoplastic materials are often used on electronic equipment housings. This application requires high impact strength and flame retardance. For many applications in the business equipment market, specially computer housings, there is a desire for reduced gloss materials or low gloss materials. In the prior art, it has been difficult to obtain a thermoplastic material which exhibits a V-0 rating measured by the UL94 V0, V1, V2 flame test at 1/16 inch thickness; high impact resistance, which may be generally defined as equal to or greater than 6.0 ft.-lb./in. measured by notched izod using the ASTM D-256 method; and a reduced gloss finish, when compared to other materials, or low gloss finish, which may be generally defined as equal to or less than 60 measured by the ASTM D-523 method.

In the preset invention it has unexpectedly been found that the concurrent use of a copolymer gel and an impact modifier, in a flame retarded polycarbonate resin, or blends thereof with other polymers, graft copolymers and/or copolymers, results in a thermoplastic composition having high impact resistant, a V-0 flame rating and a reduced gloss finish or a low gloss finish.

### DETAILED DESCRIPTION OF THE INVENTION

The thermoplastic compositions of the present invention comprise polycarbonate; a copolymer gel; an impact modifier; a flame retardant; an anti-drip agent; optionally, a graft copolymer; and, optionally, a copolymer. The composition may also include processing and stabilizing additives which are well known in the art.

### The Polycarbonate Component.

The polycarbonate component may be derived from the reaction of carbonic acid derivatives with aromatic, aliphatic, or mixed diols. The polycarbonate may be produced by the reaction of phosgene with a diol in the presence of an appropriate hydrogen chloride receptor or by a melt transesterification reaction between the diol and a carbonate ester. Polycarbonate can be made from a wide variety of starting materials, however, the principal polycarbonate produced commercially and which is preferred is bisphenol A polycarbonate, which is a polycarbonate made by condensing bisphenol A with phosgene. Also preferred are blends of bisphenol A polycarbonate with homopolymers and/or copolymers of brominated bisphenol A polycarbonate. For a more complete discussion of the chemistry of polycarbonate, one may refer to *Kirk-Othmer Encyclopedia of Chemical Technology*, Third Edition(1982) Vol. 18, pp. 479-494. This article, by D. W. Fox, is incorporated herein by this reference in its entirety.

### The Copolymer Gel Component.

The copolymer gel may be a partially or fully cross linked nitrile containing copolymer, preferably an acrylonitrile containing copolymer gel, and more preferably a styrene-acrylonitrile containing copolymer gel (SAN-GEL). The degree of cross linking in the copolymer gel may be measured by solvent swell techniques and rheological methods well known in the art. Gloss may be measured by ASTM D-523. Izod impact may be measured by ASTM D-256 and melt viscosity may be measured by ASTM D1238-73. The copolymer gel is formed by a gelation step of compounding the nitrile containing copolymer with an electrophilic reagent, such as a polyepoxide and a catalyst, such as an acid, and then used in a blending step with the polycarbonate.

The copolymer gel may be formed by a Ritter reaction which may involve formation of amides by addition of olefins or secondary and tertiary alcohols to nitrites in strongly acidic media. Suitable Ritter Reagents include diepoxides, alkyl halides, alcohols, acid chlorides, anhydrides ethers, α and β unsaturated acids and esters. Suitable epoxide ring opening catalysts include, amines, imidazoles, organic acids, such as carboxylic, and sulfonic acids, and mineral acids and Lewis Acids. The nitrile containing copolymers may be based on one or more of the following: acrylonitrile or substituted acrylonitrile monomers either alone or in combination with monovinylaromatic compounds, methacrylic acid esters of C₁-C₄ aliphatic alcohols, and imidized maleic anhydride derivatives which are unsubstituted or substituted with an alkyl or aryl group. Examples of these nitrile containing polymers which may be compounded with the polyepoxide and acid include copolymers of acrylonitrile or substituted acrylonitrile and one or more of the C₁-C₄ acrylates, styrene, and/or α-methylstyrene, and the like. The nitrile containing copolymer comprises preferably at least 19 percent by weight, more preferably 5 percent by weight, and most preferably at least 10 percent by weight acrylonitrile monomer based on the amount needed to react in the presence of acid during compounding to form the nitrile containing copolymer gel. Such nitrile containing copolymers may be prepared by emulsion, bulk, suspension, bulk-suspension or solution polymerization methods which are well known in the art. The nitrile containing copolymers may also be rubber modified resins, such as ABS, AES and ASA resins. Preferably, the nitrile containing copolymer comprises less than 1 percent by weight rubber based on the total weight of nitrile containing copolymer, and more preferably is free of rubber.

The polyepoxide which is used in making the copolymer gel preferably comprises a diepoxide. Various diepoxides which are useful are described in U.S. Pat. No. 2,890,209 which is incorporaped herein by this reference. The diepoxides may be prepared by the catalytic esterification of 3,4-epoxycyclo-hexylmethyl 3,4-epoxycyclohexanecarboxylates and have the general formula: 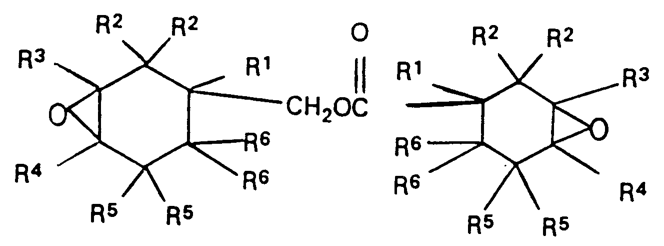
wherein R¹, R², R³, R⁴, R⁵, and R⁶ represent members selected from the group consisting of hydrogen and lower alkyl groups containing one to four carbon atoms. When any of R¹ through R⁶ represent alkyl groups and particularly the lower alkyl groups, a preferred class of diepoxides are those wherein the total number of carbon atoms contained in the alkyl groups does not exceed twelve. A particularly preferred class of compounds represented by the general formula above are those wherein R¹ through R⁶ represent members selected from the group consisting of hydrogen and methyl groups. Polymers and particularly the homopolymers made from diepoxide monomers and mixtures thereof having not more than three alkyl substituents per carbocyclic ring are preferred.

The diepoxides represented by the above formula can be prepared by reacting a selected 3-cyclohexenyl-methyl-3-cyclohexenecarboxylate with peracetic acid. The 3-cyclohexenylmethyl-3-cyclohexenecarboxylates, in turn, are readily prepared by reacting a selected 3-cyclohexenecarboxy aldehyde in the presence of an aluminum alkoxide catalyst dissolved in an inert solvent, such as benzene, at a temperature in the range of 0° to 110°C.
Other multifunctional epoxides that are expected to function in a manner similar to the preferred diepoxides include the following:
Simple Aliphatic Diepoxides:
dodecatriene dioxide,
dipentene dioxide, and
1,2,7,8-diepoxy octane;
Bis(Glycidyl Ether/Ester) Epoxides:
polycondensates of epihalohydrin and diols or diacids wherein the diol/diacid may be either aliphatic or aromatic, such as adipic acid and phthallic acid,
1,4 butanediol-diglycidyl ether, and
Bis-glycidyl ether of bisphenol A
Cycloaliphatic Diepoxides;
3,4-epoxycyclohexyl-3,4-epoxycyclohexylcarboxylate,
bis(c,4-epoxycyclohexylmethyl)adipate,
cyclooctadiene (1.5)di-epoxide,
1,2,5,6-diepoxy cyclododecane-9, and
bicycloheptadiene diepoxide
Mixed Aliphatic And Cycloaliphatic Diepoxides:
vinyl cyclobutene dioxide,
vinyl cyclopentadiene dioxide,
vinyl cyclohexene dioxide,
butenecyclobutene dioxide,
butenecyclopentene dioxide,
butadienecyclobutadiene dioxide,
butadienecyclopentadiene dioxide, and
pentadienecyclobutadiene dioxide
Tri And Poly (Di/Tri) Epoxides:
glycidyl ethers, or novalaks,
tetraglycidyl ether of 1,1,2,2, tetrakis(4-hydroxyphenyl) ethane,
triglycidyl ether of 1,3,6-trihydroxybenzene, and
triglycidyl isocyanurate (TGIC)
Epoxidized Drying and Non-Drying Oil Acids:
Epoxidized tall oils,
Epoxidized linseed oils, and
Epoxidized soy bean oils
In addition to diepoxides, other electrophilic reagents maybe used in the gelation process.

### The Impact Modifier Component.

The impact modifier may be an acrylate impact modifier or a diene rubber impact modifier. Preferably an acrylate impact modifier is selected from the group (a) methacrylate-butadiene-styrene (MBS), (b) poly(butyl-acrylate)-methyl-methacrylate, (c) a mixture of (a) and (b), and (d) poly(butyl-acrylate cosiloxane)-methyl-methacrylate. Poly(butyl-acrylate cosiloxane)-methyl-methacrylate is an impact modifier with a core consisting of butylacrylate and siloxane copolymer and a shell consisting of methyl methacrylate. Poly(butyl-acrylate)-methyl-methacrylate is an impact modifier with a core of butyl-acrylate and a methyl methacrylate shell.

### The Flame Retardant Component.

The flame retardant is selected from the group phosphates, including mono phosphates and oilgomeric phosphates, phosphonates, salts having flame-retarding properties for aromatic polycarbonates, halogen-containing low-molecular weight compounds, halogen containing high-molecular weight polymers, and mixtures thereof.

The preferred flame retardants are oligomeric phosphates, or mixtures there of, having the general formula: 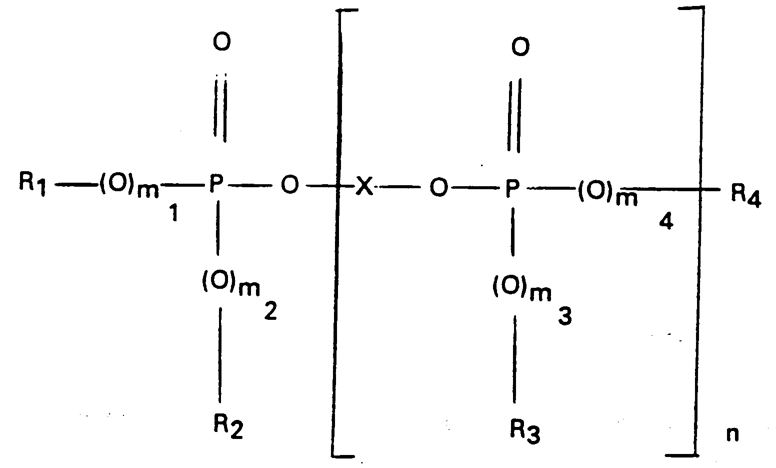
wherein R₁, R₂, R₃, and R₄ each represent an aryl or an alkaryl group chosen independently of each other and wherein X is an arylene group, m₁, m₂, m₃, and m₄, each independently of each other are 0 or 1 and wherein n = 1, 2, 3, 4 or 5 or wherein, in case of a blend of phosphates, n has an average value of 1 to 5. Normally phosphates are those compounds for which m₁, m₂, m₃ and m₄ are all equal to one. The term "phosphates" is however used throughout this description and in the claims to include compounds for which one or more of m₁, m₂, m₃ and m₄ are equal to zero.

The oligomeric phosphates as used in the polymer mixture according to the invention can be either used as separate compounds or in the form of a blend of several different oligomers. The value of n is preferably greater than 0 but smaller than 3; more preferably equal to or greater than 1, but equal to or smaller than 2. A mixture of these oligomeric phosphates can be readily used, each having a different value of n. In the case of a blend of several different oligomers the above mentioned values for n indicate the average value in the oligomer blend.

The aryl groups R₁, R₂, R₃, and R₄ may be substituted with halogen atoms or alkyl groups. The aryl group preferably is a cresyl group and/or phenyl group and/or xylenyl group and/or is a propylphenyl group and/or butylphenyl group and/or a brominated or chlorinated derivative thereof. The arylene group is a group derived from a dihydric compound, for example, resorcinol, hydroquinone, bisphenol A and chlorides and bromides thereof.

The preferably used oligomeric phosphate is an oligomeric phosphate, or a blend of such phosphates, wherein m₁, m₂, m₃ and m₄ are all equal to 1, R₁, R₂, R₃, and R₄ all represent a phenyl group. X represents a phenylene group and n has an (average) value of 1.2 to 1.7.

Salts having flame-retarding properties are generally known and are used on a large scale in polymer mixtures having polycarbonate. All salts which are suitable for polymer mixtures having a polycarbonate may be used in the polymer mixture according to the invention. In particular, those that may be mentioned are organic and inorganic sulphonates, for example, sodium trichlorobenzene sulphonate, salts of sulphone sulphonates, for example, the potassium salt of diphenylsulphone sulphonate, salts of perfluorinated alkane sulphonic acid and sodium aluminum hexafluoride.

Examples of suitable halogen-containing compounds are decabromodiphenyl ether, octabromodiphenyl, octabromodiphenyl ether and further oligomeric or polymeric bromine compounds, for example, derived from tetrabromobisphenol A or also polyphenylene ethers brominated in the nucleus.

### The Anti-drip Component.

Suitable anti-drip components are tetrafluoroethylene polymers and copolymers such as polytetrafluoroethylene polymer, tetrafluoroethylene-hexafluorophrophylene copolymer and tetrafluoroethylene copolymer containing small quantities of fluorine-free, copolymerizable, ethylenic unsaturated monomers. These polymers and copolymers are known and may be produced by known methods, such as free radical polymerization of tetrafluoroethylene in aqueous medium with a catalyst free radical initiator, such as sodium, potassium, ammonium peroxydisulphate, persulphates or peroxide. A further discussion of tetrafluoroethylene polymers and copolymers can be found in the *Encyclopedia of Polymer Science and Engineering*, Second Edition, Vol. 16, pages 577 to 648, 1989, John Wiley & Sons, Inc., which is incorporated herein by this reference.

### The Optional Graft Copolymer Component.

The optional graft copolymer component may be a copolymer which contains two or more polymeric parts of different composition, namely a rubbery backbone portion and a graft portion, that are bonded chemically. The backbone portion is preferably prepared by polymerizing a conjugated diene monomer, such as butadiene, or a conjugated diene with a monomer copolymerizable therewith, such as styrene. After formation of the backbone portion, at least one grafting monomer, and preferably two, are polymerized in the presence of the backbone portion to obtain the graft copolymer. The graft copolymer is preferably prepared by emulsion or bulk methods well known in the art.

Conjugated diene monomers normally utilized in preparing the backbone are generically described by the following formula: 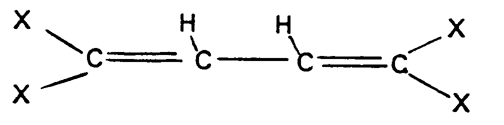
wherein X is selected from the group consisting of hydrogen, alkyl groups containing from one to five carbon atoms, chlorine or bromine. Examples of dienes that may be used are butadiene, isoprene, 1, 3-heptadiene, methyl-1,1,3-pentadiene, 2,3-dimethylbutadiene, 2-ethyl-1,2-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3-butadiene.

Optionally, the backbone portion may be an acrylate rubber or an EPDM rubber. Acrylate rubbers based on n-butyl acrylate, ethylacrylate, 2-ethylhexylacrylate, and the like are suitable. Additionally, minor amounts of a diene may be copolymerized in the acrylate rubbers to yield improved grafting with the matrix polymer. These resins are well known in the art and many are commercially available.

The backbone portion is preferably a conjugated diene polymer such as polybutadiene, polyisoprene, or a copolymer, such as butadiene-styrene, butadiene-acrylonitrile, or the like.

A first group of monomers that may be polymerized in the presence of the backbone portion to form the graft portion of the graft copolymer include monovinylaromatic compounds, which are generically described by the following formula: 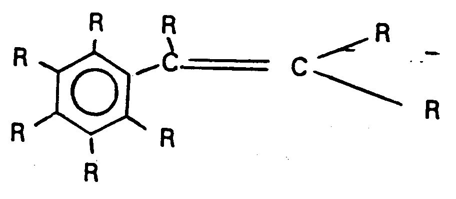
wherein R is selected from the group consisting of hydrogen, alkyl groups of 1 to 5 carbon atoms, cycloalkyl, aryl, alkaryl, aralkyl, alkoxy, aryloxy, and halogens. Examples of substituted vinylaromatic compounds include styrene, 4-methylstyrene, 3,5-diethylstyrene, 4-n, propylstyrene, α-methylstyrene, αmethyl vinyltoluene, α-chlorostyrene, α-bromostyrene, dichlorostyrene, dibromostyrene, tetra-chlorostyrene, mixtures thereof and the like. The preferred monovinylaromatic monomers used are styrene.

A second group of monomers that may be polymerized in the presence of the backbone portion to form the graft portion of the graft copolymer include acrylic monomers such as acrylonitrile, substituted acrylonitrile, and/or acrylic acid esters, for example alkyl acrylates such as methyl methacrylate, and/or α-methylstyrene and/or maleic anhydride and/or derivatives of maleic acid anhydride, such as maleimide and N-substituted maleimids, and/or acrylic monomer.

The acrylonitrile, substituted acrylonitrile, or acrylic acid esters are described generally by the following formula: 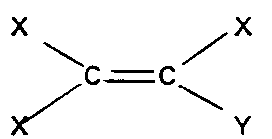
wherein X is as previously defined and Y is selected from the group consisting of cyano and carbalkoxy groups wherein the alkoxy group of the carbalkoxy contains from one to about twelve carbon atoms. Examples of such monomers include acrylonitrile, ethacrylonitrile, methacrylonitrile,
α-chloroacrylonitrile, β-chloroacrylonitrile-α-bromoacrylonitrile,
β-bromoacrylonitrile, optionally with methyl acrylate, methyl methacrylate, ethyl acrylate, butyl acrylate, propylacrylate, isopropyl acrylate and mixtures thereof. The preferred acrylic monomer is acrylonitrile and the preferred acrylic acid esters are ethyl acrylate and methyl methacrylate. It is also preferred that the acrylic acid esters, when included, are employed in combination with acrylonitrile.

In the preparation of the graft copolymer, the backbone portion is present at a level of at least 10 percent by weight, and preferably at least 25 percent by weight, more preferably at least 50 percent by weight and up to about 80 percent by weight, based on the total weight of the graft copolymer. The graft portion is preferably present at a level of from 20 percent to about 90 percent by weight based on the total weight of the graft copolymer. It is additionally preferred that the second group of grafting monomers, exemplified by acrylonitrile, ethyl acrylate and methyl methacrylate, comprise from about 10 percent to about 40 percent by weight of the grafted portion and the first group of grafting monomers, the monovinylaromatic hydrocarbon monomers, exemplified by styrene, comprise from about 60 to about 90 percent by weight of the grafted portion of the graft copolymer.

### The Optional Copolymer Component

Optionally, a copolymer may be present in preparing the graft copolymer. Typically, a certain percentage of the polymerizing monomers that are not grafted on the backbone portion may combine with each other and occur as non-grafted copolymer. For example, if styrene is utilized as one grafting monomer and acrylonitrile is the second grafting monomer, a certain portion of the composition will copolymerize as non-grafted styrene-acrylonitrile copolymer (SAN). Similarly, in the case where
α-methylstyrene (or another monomer) is substituted for the styrene in the composition used in preparing the graft polymer, a certain percentage of the composition may be an α-methylstyrene-acrylonitrile copolymer. In some cases it may be desirable to add copolymer or induce the formation of copolymer.

### Other Conventional Additives

In addition to the components mentioned above the composition according to the invention may contain one or more conventional additives in effective amounts, which include, but are not limited to fillers, reinforcing fibers, antioxidants, phosphites, lubricants stabilizers, pigments and dyes, plasticisers, mold release agents and antistatic agents.

Compositions of the invention may be made according to conventional techniques for preparing thermoplastic resins, for example, by melt blending in single or twin screw extruders.

Compositions according to the invention comprise the components polycarbonate, copolymer gel, impact modifier, flame retardant, anti-drip agent, and optional graft copolymer and copolymer in relative amounts to produce a composition having an equal or improved flame rating, equal or improved impact resistance and reduced gloss when compared to the same composition which lacks either or both of the copolymer gel or impact modifier. Compositions according to the invention preferably comprise the components in the following relative quantities: (a) 40 to 90 percent by weight polycarbonate, (b) 0.1 to 20 percent by weight copolymer gel, (c) 0.5 to 20 percent by weight impact modifier, (d) 1 to 15 percent by weight flame retardant, (e) 0.1 to 2 percent by wt. anti-drip agent; (f) 0 to 20 percent by weight graft copolymer, and (g) 0 to 40 percent by weight copolymer,; wherein the percent by weight is based on the sum of components (a) through (g). Compositions according to the invention more preferably comprise the components in the following relative quantities: (a) 60 to 80 percent by weight polycarbonate, (b) 1 to 5 percent by weight copolymer gel, (c) 1 to 8 percent by weight impact modifier, (d) 5 to 15 percent by weight flame retardant, (e) 0.1 to 0.5 percent by wt. anti-drip agent; (f) 0 to 5 percent by weight graft copolymer, and (g) 0 to 10 percent by weight copolymer,; wherein the percent by weight is based on the sum of components (a) through (g).

### EXAMPLES

The examples which follow are illustrative only and are not meant to limit the scope of the invention.

In the following examples, polycarbonate is bisphenol A polycarbonate; ABS is an acrylonitrile-butadiene-styrene graft copolymer and styrene-acrylonitrile copolymer mixture containing about 50 percent by weight butadiene; SAN-GEL-1 is a styrene-acrylonitrile copolymer cross linked with 3 percent di-epoxide; SAN-GEL-2 is a styrene-acrylonitrile copolymer crosslinked with 2.5 percent di-epoxide; SAM-GEL-3 is a styrene-acrylonitrile copolymer cross linked with 2 percent diepoxide; Phosphate or tetrabromo bisphenol A (TBBPA) are the flame retarding agents polytetrafluroethylene (PTFE) is the anti-drip agent; and the Additives include Irganox 1076 and Irganox 168 as stabilizing agents and pentaerythro tetra stearate (PETS) as a mold release agent. AIM is a core shell acrylate impact modifier having a core consisting of butylacrylate and siloxane copolymer and a shell made up of methyl methacrylate. AIM-1 is poly(butyl-acrylate)-methyl-methacrylate and AIM-2 is poly-butadiene-styrene-methyl-methacrylate. All amounts stated in the example are expressed as percent by weight of the total composition.

### EXAMPLE 1

Example 1 compositions were compounded on a Werner-Pflieder 30 mm twin screw extruder at a melt temperature between 550 and 560 F. Molding was done with an ASTM tool using a melt temperature of 460°F. This example demonstrates that compositions of polycarbonate, an impact modifier (AIM) and a copolymer gel (SAN-GEL-1) have the unexpected properties of low gloss, high impact resistance and a V0 flame rating and that compositions lacking either or both of the impact modifier or copolymer gel do not have all three of these properties (blend number 1 as compared to blend numbers 2, 3 and 4). The results are set forth in Table 1.

| Table 1 | | | | |
|---|---|---|---|---|
| Blend No. | 1 | 2 | 3 | 4 |
| Polycarbonate | 81.55 | 87.55 | 84.05 | 90.05 |
| ABS | 0 | 0 | 0 | 0 |
| SAN-GEL-1 | 2.5 | 2.5 | 0 | 0 |
| AIM | 6.5 | 0 | 6 | 0 |
| Phosphate | 9.5 | 9 | 9 | 9 |
| PTFE | 0.2 | 0.2 | 0.2 | 0.2 |
| Additives | 0.75 | 0.75 | 0.75 | 0.75 |
| Notched Izod (ft-lb/in) | 11.5 | 0.6 | 12 | 0.8 |
| Gardner Gloss (60 degree) | 60 | 34 | 101 | 102 |
| UL 94 (1/16'' thickness) | V0 | V0 | V0 | V0 |

### EXAMPLE 2

Example 2 compositions were compounded on a Werner-Pflieder 30 mm twin screw extruder at a melt temperature between 550 and 560 F. Molding was done with an ASTM tool using a melt temperature of 465°F and mold temperature of 150°F. Example 2 demonstrates that the use of a copolymer gel (SAN-GEL) alone results in low gloss and the loss of impact strength and flame rating (blend nos. 2 and 3 as compared to blend no. 1), and that the use of an impact modifier (AIM) and a copolymer gel (SAN GEL) together result in low gloss, high impact and a V0 flame rating (blend nos. 4 and 5 as compared to blend nos. 1, 2 and 3). The results are set forth in Table 2.

| Table 2 | | | | | |
|---|---|---|---|---|---|
| Blend No. | 1 | 2 | 3 | 4 | 5 |
| Polycarbonate | 80.05 | 77.85 | 77.85 | 80.05 | 79.05 |
| ABS | 10.5 | 9 | 10 | 4.5 | 4.5 |
| SAN-GEL-1 | 0 | 3 | 2 | 3 | 4 |
| AIM | 0 | 0 | 0 | 3 | 3 |
| Phosphate | 8.5 | 9 | 9 | 8.5 | 8.5 |
| PTFE | 0.2 | 0.4 | 0.4 | 0.2 | 0.2 |
| Additives | 0.75 | 0.75 | 0.75 | 0.75 | 0.75 |
| Notched Izod (ft-lb/in) | 7.4 | 2.3 | 2.3 | 8.7 | 7.2 |
| Gardner Gloss (60 degree) | 97 | 32 | 56 | 23.3 | 21.6 |
| UL 94 (1/16'' thickness) | V0 | V1 | V2 | V0 | V0 |

### EXAMPLE 3

In Example 3 all pellets were molded at melt temperature of 475°F and mold temperature of 150°F, except for formulation no. 6 which was molded at melt temperature of 460°F and mold temperature of 150°F. Example 3 demonstrates the use of three different copolymer gels (SAN-GEL-1, SAN-GEL-2, and SAN-GEL-3) made with varying di-epoxide contents (blend nos. 2, 3, 4, 5, 6 and 7) with an impact modifier (AIM) to produce a resin having low gloss, high impact strength and a flame rating of V0 when compared to blend no. 1, which has high impact and a V0 flame rating but high gloss. The results are set forth in Table 3.

| Table 3 | | | | | | | |
|---|---|---|---|---|---|---|---|
| Blend No. | 1 | 2 | 3 | 4 | 5 | 6 | 7 |
| Polycarbonate | 80.05 | 80.55 | 79.55 | 79.55 | 79.55 | 70.55 | 65.3 |
| ABS | 10.5 | 4.5 | 4.5 | 4.5 | 4.5 | 10.5 | 11.5 |
| SAN-GEL-1 | 0 | 3 | 4 | 0 | 0 | 4 | 4 |
| SAN-GEL-2 | 0 | 0 | 0 | 4 | 0 | 0 | |
| SAN-GEL-3 | 0 | 0 | 0 | 0 | 4 | 0 | |
| AIM | 0 | 3 | 3 | 3 | 3 | 3 | 4 |
| Phosphate | 8.5 | 8 | 8 | 8 | 8 | 11.5 | 13.5 |
| PTFE | 0.2 | 0.2 | 0.2 | 0.2 | 0.2 | 0.2 | 0.4 |
| Additives | 0.75 | 0.75 | 0.75 | 0.75 | 0.75 | 0.75 | 1.25 |
| Notched Izod (ft-lb/in) | 8.6 | 6.5 | 7.2 | 6.1 | 9.6 | 9.6 | 11.0 |
| Gardner Gloss (60 degree) | 99 | 39 | 22 | 34 | 40 | 50.5 | 56 |
| UL 94 (1/16'' thickness) | V0 | V0 | V0 | V0 | V0 | V0 | V0 |

### EXAMPLE 4

Example 4 compares two different impact modifiers (AIM-1 and AIM-2). Example 4 also demonstrates the use of different flame retardants (phosphate and tetra bromo BPA) and a mixture thereof. These compositions demonstrate the properties of low gloss, high impact and V0 flame rating The results are set forth in Table 4.

| Table 4 | | | | |
|---|---|---|---|---|
| Blend No. | 1 | 2 | 3 | 4 |
| Polycarbonate | 78.75 | 78.55 | 84.05 | 79.05 |
| ABS | 3.5 | 3.5 | 3 | 3 |
| SAN-GEL | 3 | 3 | 3 | 3 |
| AIM-1 | 4.5 | 2 | 0 | 0 |
| AIM-2 | 0 | 2.5 | 4 | 4.5 |
| Phosphate | 9.5 | 9.5 | 0 | 7.5 |
| Br-FR | 0 | 0 | 5 | 2 |
| PTFE | 0.2 | 0.2 | 0.2 | 0.2 |
| Additives | 0.75 | 0.75 | 0.75 | 0.75 |
| Notched Izod (ft-lb/in) | 10.6 | 11.2 | 11.9 | 11.9 |
| Gardner Gloss (60 degree) | 31.8 | 37.9 | 59.9 | 49 |
| UL94 (1/16'' thickness) | V0 | V0 | V0 | V0 |

Whereas this invention is illustrated and described with specific reference to embodiments and examples thereof, it is to be understood that various changes may be made in adapting the invention to different embodiments without departing from the broad inventive of concepts disclosed herein and comprehended by the claims that follow.

## Claims

1. A composition comprising:
(a) a polycarbonate;
(b) a copolymer gel;
(c) an impact modifier;
(d) a flame retardant;
(e) an anti-drip agent;
(f) optionally, a graft copolymer; and
(g) optionally, a copolymer.

2. A composition as recited in Claim 1 wherein the components polycarbonate, copolymer gel, impact modifier, flame retardant, anti-drip agent, optional copolymer gel and optional copolymer are present in amounts sufficient to produce a composition having an equal or improved flame rating, equal or improved impact resistance and reduced gloss when compared to the same composition which lacks either or both a copolymer gel or impact modifier.

3. A composition as recited in Claim 2 wherein the copolymer gel is a nitrile containing copolymer gel.

4. A composition as recited in Claim 3 wherein the copolymer gel is an acrylonitrile containing copolymer gel.

5. A composition as recited in Claim 4 wherein the copolymer gel is a styrene-acrylonitrile containing copolymer gel.

6. A composition as recited in Claim 2 wherein the acrylate impact modifier is selected from the group (a) poly-butadiene-styrene-methyl-methacrylate, (b) poly( butyl-acrylate)-methyl-methacrylate, (c) a mixture of (a) and (b), and (c) poly(butyl-acrylate cosiloxane)-methyl-methacrylate.

7. A composition as recited in Claim 2 wherein the flame retardant is selected from the group phosphates, phosphonates, salts having flame-retarding properties for aromatic polycarbonates, halogen-containing low-molecular weight compounds and halogen containing high-molecular weight polymers.

8. A composition as recited in Claim 2 wherein the anti-drip agent is selected from the group polytetrafluoroethylene polymers and polytetrafluoethylene copolymers.

9. A composition as recited in Claim 2 which further comprises additives selected from the group fillers, reinforcing fibers, stabilizers, pigments and dyes, plasticisers, mold release agents, antistatic agents and mixtures thereof.

10. A composition comprising:
(a) 40 to 90 percent by weight polycarbonate;
(b) 0.1 to 20 percent by weight copolymer gel;
(c) 0.5 to 20 percent by weight impact modifier;
(d) 1 to 15 percent by weight flame retardant;
(e) 0.1 to 2 percent by wt. anti-drip agent;
(f) optionally, 0 to 20 percent by weight graft copolymer; and
(g) optionally, 0 to 40 percent by weight copolymer;
wherein the percent by weight is based on the sum of components (a) through (g).
